# EUROPÄISCHE PATENTSCHRIFT

(11) **EP 3 284 335 B1**
(45) Veröffentlichungstag und Bekanntmachung des Hinweises auf die Patenterteilung: **03.07.2019**
(21) Anmeldenummer: 17186262.6
(22) Anmeldetag: 15.08.2017
(51) Int. Cl.: A01D 75/18, A01D 89/00, A01D 41/10

(54) **REVERSIEREN EINES GUTAUFNEHMERS**
REVERSAL OF A PICK-UP
PROCÉDÉ D'INVERSION D'UN RAMASSEUR

(30) Priorität: 16.08.2016 DE 102016215264
(43) Veröffentlichungstag der Anmeldung: 21.02.2018
(73) Patentinhaber: Deere & Company, Moline, IL 61265 (US)
(72) Erfinder: Schmöning, Christoph, 68163 Mannheim (DE)
(74) Vertreter: Holst, Sönke

(56) Entgegenhaltungen:
- WO-A1-2015/091567
- DE-A1-102007 015 101

## Beschreibung

Die Erfindung betrifft einen Gutaufnehmer und eine damit ausgestattete Erntemaschine.

### Stand der Technik

Gutaufnehmer werden in der Landwirtschaft verwendet, um auf einem Feld liegendes Gut, das in der Regel zuvor getrocknet und in einem Schwad abgelegt wurde, aufzunehmen und einer Erntemaschine zuzuführen, in der es zu einem Ballen gepresst (Ballenpresse), - ggf. nach einem Schneidvorgang - zum Abtransport abgelegt (Ladewagen), gehäckselt (Feldhäcksler) oder ausgedroschen (Mähdrescher) wird. Derartige Gutaufnehmer umfassen üblicherweise eine Aufsammeltrommel mit an sich quer zur Vorwärtsrichtung erstreckenden Zinkenträgern angebrachte Zinken. Die Zinkenträger werden in Bewegung versetzt, indem ein sie abstützender Halter in Rotation versetzt wird. Die Zinken erstrecken sich durch Zwischenräume, die zwischen am Rahmen des Gutaufnehmers angebrachten Abstreifern verbleiben, nach außen und bewegen sich entlang dieser Zwischenräume. Die Zinkenträger können durch Kurven- oder Nockenbahnen gesteuert werden (US 2 388 212 A), so dass sich die Winkelstellung der Zinkenträger während des Umlaufs ändert, um das Erntegut möglichst aggressiv annehmen zu können und sich am Abgabepunkt in den Innenraum der Abstreifer zurückziehen zu können, oder sie sind ungesteuert, d. h. starr mit dem Halter verbunden (EP 0 903 077 A1). Stromab der Aufsammeltrommel folgt üblicherweise eine Querförderschnecke oder ein anderer Abgabeförderer, der das Erntegut der Erntemaschine zuführt, in der es weiter verarbeitet (geschnitten) oder gesammelt oder gepresst wird.

Nach einem Gutstau oder der Aufnahme eines Fremdkörpers ist es wünschenswert, den Gutaufnehmer zu reversieren, d. h. in einer gegenüber der Erntegutaufnahme umgekehrten Richtung anzutreiben, um das Erntegut und ggf. den Fremdkörper wieder auszuwerfen. Üblicherweise wird dazu ein oberhalb der Aufsammeltrommel angebrachter Niederhalter angehoben und die Querförderschnecke und die Einzugswalzen der Erntemaschine in gegenüber dem Erntebetrieb umgekehrter Drehrichtung angetrieben (EP 0 403 899 A1). Da sich bei gebräuchlichen Aufsammeltrommeln beim Reversieren die Zinken am Gehäuse der Aufsammeltrommel verhaken würden, erfolgt gemäß diesem Dokument kein Reversieren der Aufsammeltrommel.

Zur Verbesserung des Erntegutauswurfs beim Reversieren wurde in der DE 10 2005 020 463 A1 vorgeschlagen, im rückwärtigen Bereich der Zinken eine Leiteinrichtung vorzusehen, die die Zinken bei einem Reversieren des Aufnahmerotors in die Zwischenräume zwischen den Abstreifern leitet.

Die DE 10 2007 015 101 A1 schlägt hingegen vor, die Zinkenträger frei drehbar zu lagern und den Winkelbereich durch Anschläge zu begrenzen, sodass die Zinken mit den Zinkenträgern beim Reversieren eine andere Drehstellung annehmen.

In der WO 2015/091567 A1 wird vorgeschlagen, beim Reversieren der Aufsammeltrommel das Antriebsmoment zu erfassen und bei Überschreiten eines Grenzwerts ihren Antrieb abzuschalten. Alternativ kann ein Antrieb auf Bedienereingabe hin die Aufsammeltrommel um eine Umdrehung oder für eine bestimmte Zeit reversieren.

### Aufgabe

Die Lösungen nach DE 10 2005 020 463 A1, DE 10 2007 015 101 A1 erfordern einen relativ hohen mechanischen Aufwand, während die Anordnung gemäß WO 2015/091567 A1 ebenfalls komplexe, elektronische und/oder hydraulische Mittel benötigt, um sicherzustellen, dass die Aufnehmertrommel nur für eine bestimmte Zeit oder genau eine Umdrehung rückwärts dreht.

Das der Erfindung zu Grunde liegende Problem wird darin gesehen, einen Gutaufnehmer mit einer reversierbaren Aufsammeltrommel bereitzustellen, das die erwähnten Probleme nicht oder in vermindertem Maße aufweist.

### Lösung

Dieses Problem wird erfindungsgemäß durch die Lehre der Patentansprüche 1 und 9 gelöst, wobei in den weiteren Patentansprüchen Merkmale aufgeführt sind, welche die Lösung in vorteilhafter Weise weiterentwickeln.

Ein Gutaufnehmer umfasst eine Aufsammeltrommel, die in der Regel mit Zinkenträgern ausgestattet ist, die jeweils mehrere Zinken haltern, einen Hydromotor zum wahlweisen Antrieb der Aufsammeltrommel in einer ersten Drehrichtung für den Erntebetrieb oder einer zweiten, reversierenden Drehrichtung, einen der Aufsammeltrommel zugeordneten, durch einen Hydraulikzylinder zwischen einer angehobenen und einer abgesenkten Stellung beweglichen Niederhalter, und eine hydraulische Ventilanordnung, die betreibbar ist, Hydraulikfluid aus dem Hydraulikzylinder dem Hydromotor zur Reversierung zuzuführen. Die Menge des aus dem Hydraulikzylinder in den Hydromotor übertragenen Hydraulikfluids ist, da sie durch den Hubraum des Hydraulikzylinders bestimmt wird, genau definiert, sodass sich gemäß der vorliegenden Erfindung durch einfache Mittel erreichen lässt, dass die Aufnehmertrommel nur um einen bestimmten, gewünschten Winkel rückwärts dreht. Dieser Winkel kann beispielsweise 180° entsprechend einer halben Umdrehung betragen. Durch die begrenzte Rückwärtsdrehung der Aufsammeltrommel vermeidet man, dass diese beim Rückwärtsdrehen Erntegut vom Boden aufnimmt und über einen größeren Drehwinkel mit sich führt. Es ist somit nicht zu befürchten, dass sich die Zinken der Aufsammeltrommel mit deren Abstreifern verhaken oder Erntegut an unerwünschte Stellen (insbesondere im Inneren der Aufsammeltrommel) gelangen, ohne dass besondere Maßnahmen zur Führung oder Winkelverstellung der Zinken beim Reversieren erforderlich wären.

Die Ventilanordnung kann betreibbar sein, durch den sich schwerkraftbedingt aus der angehobenen in die abgesenkte Stellung bewegenden Niederhalter aus dem Hydraulikzylinder hinausgedrücktes Hydraulikfluid aus dem Hydraulikzylinder dem Hydromotor zur Reversierung zuzuführen.

Die Ventilanordnung kann ein fernsteuerbares Umschaltventil umfassen, das in einer ersten Stellung den Hydraulikzylinder mit einer Druckquelle verbindet und in einer zweiten Stellung den Hydraulikzylinder mit dem Hydromotor verbindet.

Zwischen dem fernsteuerbaren Umschaltventil und dem Hydraulikzylinder kann ein fernsteuerbares Absperrventil angeordnet sein.

Eine das Umschaltventil und das Absperrventil verbindende Leitung kann mit einem Druckspeicher verbunden sein.

Das Umschaltventil kann in seiner zweiten Stellung den beim Reversieren der Aufsammeltrommel als Auslass wirkenden Anschluss des Hydromotors mit einem Tank verbinden.

Ein schaltbares Durchlassventil kann parallel zum Hydromotor geschaltet sein, das in seiner geöffneten Stellung einen Freilauf des Hydromotors ermöglicht.

Eine Steuerung kann mit dem Umschaltventil und dem Absperrventil verbunden und betreibbar sein, die Ventilanordnung in einer Erntebetriebsart, in welcher sich das Umschaltventil in seiner ersten Stellung befindet, das Durchlassventil geschlossen ist und der Niederhalter sich in seiner abgesenkten Stellung befindet, in einer ersten Reversierbetriebsart, in welcher sich das Umschaltventil in seiner ersten Stellung befindet, das Durchlassventil geöffnet ist und der Niederhalter sich in seiner angehobenen Stellung befindet, und einer sich zeitlich unmittelbar an die erste Reversierbetriebsart anschließenden, zweiten Reversierbetriebsart zu betreiben, in welcher sich das Umschaltventil in seiner zweiten Stellung befindet, das Durchlassventil geöffnet ist und der Niederhalter sich aufgrund der Schwerkraft absenkt und sein Hydraulikfluid den Hydromotor reversiert. Anschließend kann die Steuerung selbsttätig oder auf Bedienereingabe hin die von ihr kontrollierten Bauteile veranlassen, den Erntebetrieb wieder aufzunehmen.

Der Gutaufnehmer kann an einer beliebigen landwirtschaftlichen Erntemaschine vorzugsweise in der Art eines Feldhäckslers, eines Ladewagens, eines Mähdreschers oder einer Ballenpresse verwendet werden.

Die Steuerung kann mit einer Pumpe zur Versorgung des Hydromotors im Erntebetrieb sowie Antrieben von Vorpresswalzen und eines Abgabeförderers des Gutaufnehmers kontrollierend verbunden und betreibbar sein, in der Erntebetriebsart bei abgesenktem Niederhalter die Aufnehmertrommel, den Abgabeförderer und die Vorpresswalzen in einer ersten Richtung anzutreiben, in der ersten, insbesondere manuell oder durch einen Sensor (z.B. Metalldetektor oder Stausensor) veranlassbaren Reversierbetriebsart für eine vorgegebene Zeit die Aufnehmertrommel nicht anzutreiben und vorzugsweise einen Freilauf des Hydromotors zu ermöglichen und bei angehobenem Niederhalter den Abgabeförderer und die Vorpresswalzen in einer zweiten Richtung anzutreiben und in der zweiten Reversierbetriebsart den Abgabeförderer und die Vorpresswalzen anzuhalten und die Aufnehmertrommel durch den absinkenden Niederhalter zu reversieren.

### Ausführungsform

In den Zeichnungen ist ein nachfolgend näher beschriebenes Ausführungsbeispiel der Erfindung dargestellt. Es zeigt:
- Fig. 1: eine Seitenansicht eines Feldhäckslers mit einem Gutaufnehmer,
- Fig. 2: ein Diagramm der Antriebe des Gutaufnehmers beim Erntebetrieb,
- Fig. 3: ein Diagramm der Antriebe des Gutaufnehmers in einer ersten Reversierbetriebsart, und
- Fig. 4: ein Diagramm der Antriebe des Gutaufnehmers in einer zweiten Reversierbetriebsart.

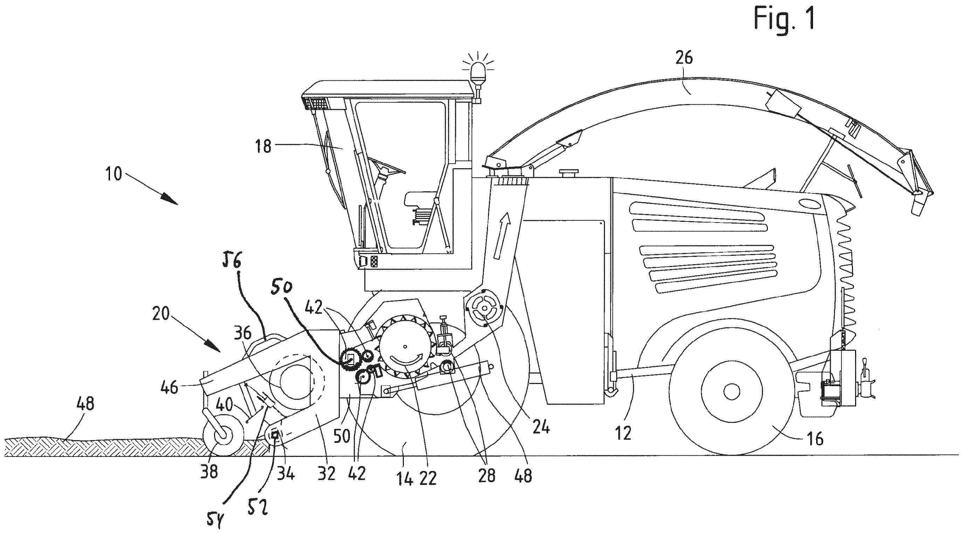

In der Figur 1 ist eine Erntemaschine in der Art eines selbstfahrenden Feldhäckslers 10 dargestellt. Der Feldhäcksler 10 baut sich auf einem Rahmen 12 auf, der von vorderen angetriebenen Rädern 14 und lenkbaren rückwärtigen Rädern 16 getragen wird. Die Bedienung des Feldhäckslers 10 erfolgt von einer Fahrerkabine 18 aus, von der aus ein Erntevorsatz in Form eines Gutaufnehmers 20 einsehbar ist. Mittels des Gutaufnehmers 20 vom Boden aufgenommenes Erntegut, z. B. Gras oder dergleichen, wird über einen Einzugsförderer mit Vorpresswalzen 42, die innerhalb eines Einzugsgehäuses 50 an der Frontseite des Feldhäckslers 10 angeordnet sind, einer Häckseltrommel 22 zugeführt, die es in kleine Stücke häckselt und es einem Auswurfbeschleuniger 24 aufgibt. Das Gut verlässt die Erntemaschine 10 zu einem nebenher fahrenden Anhänger über einen um eine etwa vertikale Achse drehbaren und in der Neigung verstellbaren Auswurfkrümmer 26. Zwischen der Häckseltrommel 22 und der Fördervorrichtung 24 erstreckt sich eine Nachzerkleinerungsvorrichtung 28 mit zwei Körnerprozessorwalzen, durch die das zu fördernde Gut der Fördervorrichtung 24 tangential zugeführt wird. Die Nachzerkleinerungsvorrichtung 28 wird insbesondere bei der Maisernte benötigt, um Körner anzuschlagen, und wird bei der Grasernte ausgebaut oder in eine unwirksame Offenstellung verbracht.

Der Gutaufnehmer 20 ist als so genannte Pick-Up ausgebildet. Der Gutaufnehmer 20 baut sich auf einem Gestell 32 auf und stützt sich (zumindest teilweise) über beidseitig angebrachte Stützräder 38, die über je einen Träger 46 am Gestell 32 befestigt sind, auf dem Erdboden ab. Die Aufgabe des Gutaufnehmers 20 besteht darin, auf dem Boden eines Felds verstreut oder in einem Schwad 48 abgelegtes Erntegut aufzunehmen und es der Erntemaschine 10 zur weiteren Bearbeitung zuzuführen. Hierzu wird der Gutaufnehmer 20 während des Erntebetriebes mit geringem Abstand zum Erdboden über das Feld bewegt, während er zum Transport auf einer Strasse oder auf Wegen mittels eines Hydraulikzylinders 48 angehoben wird, welcher das Einzugsgehäuse 50 und den daran befestigten Gutaufnehmer 20 um die Drehachse der Häckseltrommel 22 verschwenkt. Der Hydraulikzylinder 48 dient auch zur Einstellung der Höhe des Gutaufnehmers 20 über dem Boden, bzw. zur Einstellung des Auflagedrucks der Stützräder 38 auf dem Erdboden. Zum Gutaufnehmer 20 gehört ein Abgabeförderer 36 in Form einer Förderschnecke, die das aufgenommene Gut von den Seiten des Gutaufnehmers 20 zu einer in der Mitte gelegenen, nicht gezeigten Abgabeöffnung fördert, hinter der der Einzugsförderer mit den Vorpresswalzen 42 folgt. Der Gutaufnehmer 20 weist auch eine (wie der Abgabeförderer 36) rotativ angetriebene Aufsammeltrommel 34 auf, die unterhalb des Abgabeförderers 36 angeordnet ist und mit seinen Zinken das Gut vom Erdboden anhebt, um es dem Abgabeförderer 36 zu übergeben. Die Aufsammeltrommel 34 kann beliebiger Ausführungsart sein, d.h. mit gesteuerten oder ungesteuerten Zinken versehen und innerhalb eines Gehäuses mit Abstreifern angeordnet sein, oder das Gehäuse kann entfallen. Eine mögliche Ausführungsform der Aufsammeltrommel 34 ist in der DE 10 2006 001 338 A1 gezeigt, wobei die Abstreifer in beliebiger anderer als dort gezeigter Weise befestigt werden könnten.

Außerdem ist ein Niederhalter 40 in Form eines über dem Aufnehmerrotor 34 angeordneten Bleches am Gestell 32 befestigt. Der Niederhalter 40 ist an beiden seitlichen Enden jeweils an einem Halter 56 befestigt, der an seinem rückwärtigen Ende um eine quer verlaufende Schwenkachse drehbar am Gestell 32 angelenkt ist. Zwei, jeweils den Haltern 56 zugeordnete Hydraulikzylinder 54 dienen zum fremdkraftbetätigten Verschwenken des Halters 56 um die Schwenkachse und somit zum Anheben bzw. Absenken des Niederhalters 40 zwischen einer angehobenen Stellung und einer beim Erntebetrieb verwendeten, abgesenkten Stellung. Der Drehantrieb des Aufnehmerrotors 34 erfolgt mittels eines Hydromotors 52, der insbesondere als Hydrostat ausgeführt sein kann. Der Antrieb des Abgabeförderers 36 kann mechanisch vom Feldhäcksler 10 aus erfolgen oder mittels eines weiteren Hydromotors, der in den Figuren nicht gezeigt wird.

Im Folgenden beziehen sich Richtungsangaben, wie seitlich, unten und oben, auf die Vorwärtsbewegungsrichtung V des Gutaufnehmers 20, die in den Figuren nach links verläuft.

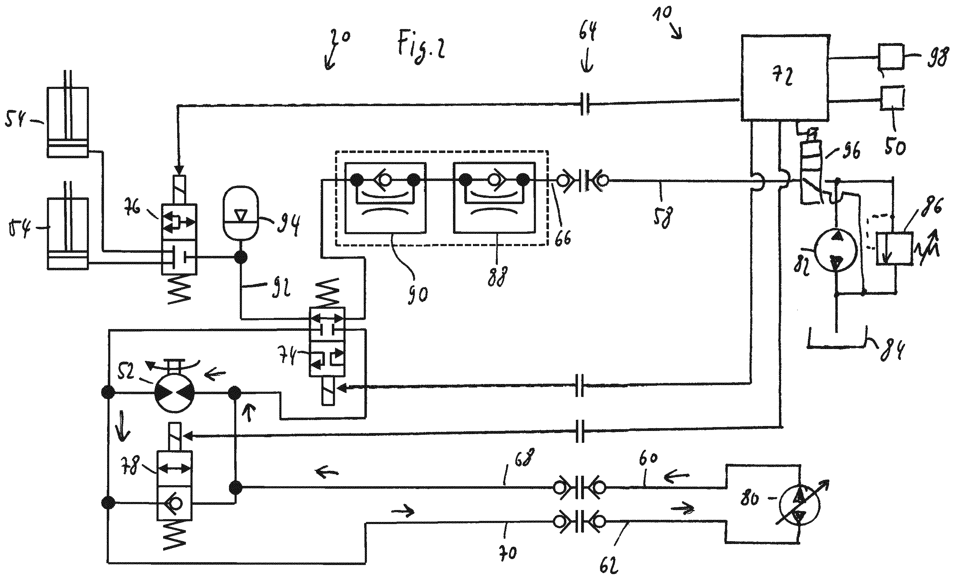

Die Figur 2 zeigt ein Diagramm der Antriebe 52, 54 des Gutaufnehmers 20 beim Erntebetrieb. Die Versorgung erfolgt durch hydraulische Leitungen 58, 60, 62 des Feldhäckslers 10, die an einer Schnittstelle 64 trennbar mit gutaufnehmerseitigen Leitungen 66, 68, 70 verbunden werden. Die Schnittstelle 64 ist als Multikuppler ausgeführt und stellt auch elektrische Verbindungen zwischen einer elektronischen Steuerung 72 und einer gutaufnehmerseitigen Ventilanordnung her, die ein Umschaltventil 74, ein Absperrventil 76 und ein Durchlassventil 78 umfasst. Die Steuerung 72 kann die Stellungen der erwähnten Ventile 74, 76, 78 demnach kontrollieren.

Die Figur 2 zeigt, wie bereits erwähnt, den Erntebetrieb. Im Erntebetrieb erfolgt der Antrieb des Hydromotors 52 (entsprechend der gezeigten Pfeile) ausgehend von einer verstellbaren Pumpe 80 des Feldhäckslers 10 über die Leitung 60, die Schnittstelle 64 und die Leitung 68 und das vom Hydromotor 52 abfließende Hydrofluid gelangt über die Leitung 70, die Schnittstelle 64 und die Leitung 62 wieder zum Einlass der Pumpe 80. Das parallel zum Hydromotor 52 geschaltete Durchlassventil 78 ist in einer Sperrstellung, in der ein (im Erntebetrieb gesperrtes) Rückschlagventil wirksam ist. Die Pumpe 80 und der Hydromotor 52 arbeiten im Erntebetrieb, wie dargestellt, in einem geschlossenen Kreis. Beide Anschlüsse des Hydromotors 52 sind weiterhin mit dem Umschaltventil 74 verbunden, das sich im Erntebetrieb in einer gesperrten Stellung befindet. Es können auf der Seite des Feldhäckslers 10 noch ein oder mehrere, weitere Ventile zwischen der Pumpe 80 und den Leitungen 60 und 62 angeordnet sein. Die Anbringung und der mechanische Antrieb der Pumpe und die erwähnten, weiteren Ventile können entsprechend der DE 10 2014 219 205 A1 oder der DE 10 2009 003 242 A1 ausgeführt sein.

Im Erntebetrieb ist der Niederhalter 40 normalerweise abgesenkt, um den von der Aufsammeltrommel 34 aufgenommenen Erntegutfluss nach oben hin zu begrenzen. Das mit beiden Kolbenkammern der einfachwirkenden Hydraulikzylinder 54 verbundene Absperrventil 76 ist geschlossen und die Hydraulikzylinder 54 sind in sich blockiert. Der andere Anschluss des Absperrventils 76 ist mit einer Leitung 92 verbunden, die mit dem Umschaltventil 74 und einem pneumatischen Druckspeicher 94 verbunden ist. Der andere Anschluss des Umschaltventils 74 ist über zwei Blenden 88, 90 mit gegensinnigen, jeweils parallel zur Blende geschalteten Rückschlagventilen mit der Leitung 66 verbunden, die über die Schnittstelle 64 mit der Leitung 58 verbunden ist. Die Leitung 58 führt zu einem Niederhalterverstellventil 96, das die Leitung 58 beim Erntebetrieb mit einem Tank 84 verbindet. Bei geöffnetem Absperrventil 76 kann somit Hydraulikfluid aus den Hydraulikzylindern 54 abfließen und der Niederhalter 40 sinkt schwerkraftbedingt nach unten in die abgesenkte Position. Zum Anheben des Niederhalters 40 kann bei geöffnetem Absperrventil 76 Hydraulikfluid aus dem Tank 84 von einer Pumpe 82, deren Druck durch ein Druckbegrenzungsventil 86 begrenzt wird, und das dann geöffnete Niederhalterverstellventil 96 in die Hydraulikzylinder 54 fließen. Die Vorgabe der Position des Niederhalters 40 kann durch die Steuerung 72 erfolgen, basierend auf einer Bedienereingabe mittels einer Bedienerschnittstelle 98 oder einem Sensor zur Erfassung des Erntegutdurchsatzes, wobei die Steuerung 72 den Niederhalter 40 in eine zum Erreichen eines optimalen Erntegutflusses geeignete Position verbringt.

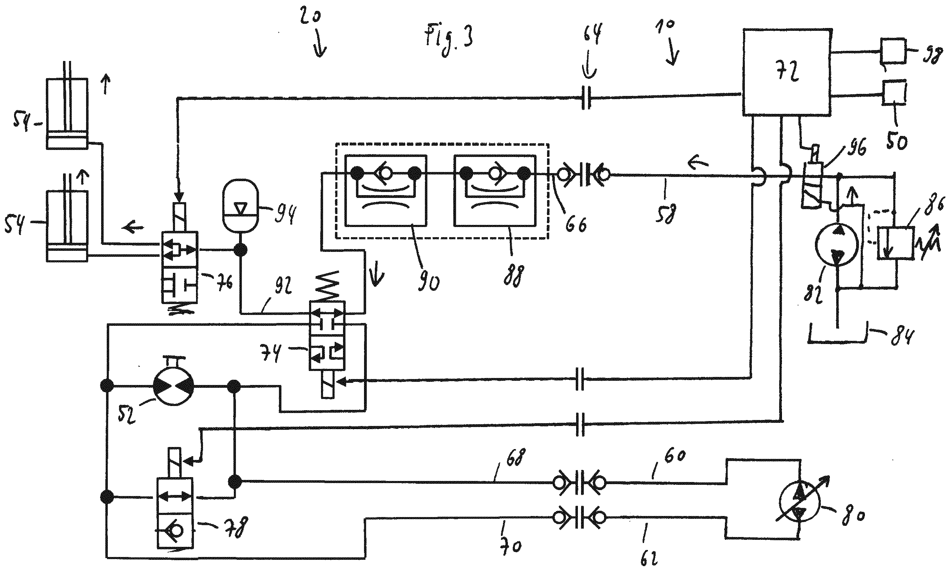

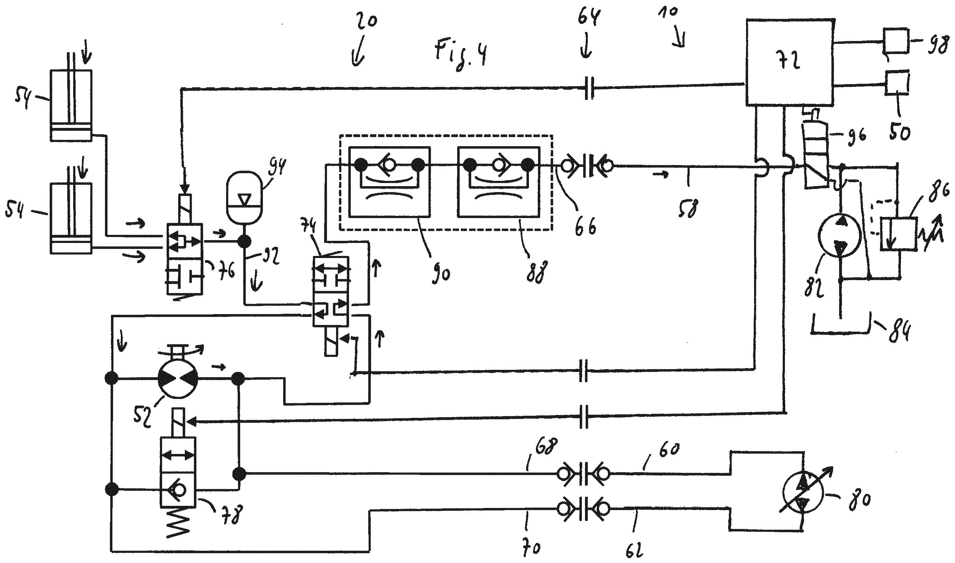

Falls beim Erntebetrieb ein Metalldetektor 50 oder ein nicht gezeigter Sensor zur Erfassung eines Erntegutstaus anspricht, oder auf eine Eingabe eines Bedieners in die Bedienerschnittstelle 98 hin, ist die Steuerung 72 derart programmiert, dass sie selbsttätig nacheinander eine erste Reversierbetriebsart, die in der Figur 3 gezeigt ist, und unmittelbar anschließend eine zweite Reversierbetriebsart, die in der Figur 4 gezeigt ist, veranlasst. In der ersten Reversierbetriebsart nach Figur 3 wird die verstellbare Pumpe 80 in eine Neutralposition verbracht, in der sie kein Hydraulikfluid mehr in die Leitung 60 liefert. Das parallel zum Hydromotor 52 geschaltete Durchlassventil 78 ist nun geöffnet, sodass der Hydromotor 52 frei drehen kann. Sollte die Pumpe 80 in dieser Betriebsart einen gegenüber dem Erntebetrieb reversierten Fluss bereitstellen, wird dieser ebenfalls über das Durchlassventil 78 zurückgeführt, um ein Rückwärtsdrehen des Hydromotors 52 zu verhindern.

Das Umschaltventil 74 befindet sich in der ersten Reversierbetriebsart weiterhin in der Stellung gemäß Figur 2 und erlaubt ein Anheben des Niederhalters 40 durch die Hydraulikzylinder 54 mit Hydraulikfluid von der Pumpe 82 über das Niederhalterverstellventil 96, das Umschaltventil 74 und das nunmehr in die geöffnete Stellung verbrachte Absperrventil 76, wie durch die Pfeile angedeutet.

In der ersten Reversierbetriebsart veranlasst die Steuerung 72 ein Reversieren der Vorpresswalzen 42 und des Abgabeförderers 36 für einen bestimmten Zeitraum. Das im Einzugskanals 50 und im Gutaufnehmer 20 oberhalb der Aufsammeltrommel 34 vorhandene Erntegut wird daher nach vorn befördert. Die Aufsammeltrommel 34 kann zwar geringfügig gegen das anströmende Erntegut nach vorn zurückdrehen, wird aber nicht aktiv angetrieben.

In der sich zeitlich unmittelbar anschließenden, zweiten Reversierbetriebsart gemäß Figur 4 hat die Steuerung 72 das Reversieren der Vorpresswalzen 42 und des Abgabeförderers 36 beendet. In der zweiten Reversierbetriebsart bleibt die verstellbare Pumpe 80 in der Neutralposition, in der sie kein Hydraulikfluid mehr in die Leitung 60 liefert. Während das Absperrventil 76 in der geöffneten Stellung verbleibt, wird das Umschaltventil 74 in eine die Leitung 92 mit dem Anschluss des Hydromotors 52, der im Erntebetrieb als Auslass dient, verbindende Stellung verbracht und der Anschluss des Hydromotors 52, der im Erntebetrieb als Einlass dient, wird über das Umschaltventil 74 und die Blenden 90, 88, die Leitung 66, die Schnittstelle 64, die Leitung 58 und das Niederhalterverstellventil 96 mit dem Tank 84 verbunden. Das Gewicht des Niederhalters 40 drückt das Hydraulikfluid aus den Hydraulikzylindern 54 und fließt, wie durch die Pfeile gezeigt, durch den Hydromotor 52 und schließlich in den Tank 84. Somit dreht die Aufsammeltrommel 34 um einen bestimmten Winkel rückwärts und gibt das zuvor (in der ersten Reversierbetriebsart) an ihrer Oberseite abgelegte Erntegut nach vorn auf den Erdboden ab. Der Drehwinkel ist durch das Volumen der Hydraulikzylinder 54 und des Druckspeichers 94 vorgegeben und kann derart dimensioniert werden, dass nur ein gewünschter Drehwinkel erreicht wird, bei dem weder ein Verklemmen von Zinken der Aufsammeltrommel 34 an deren Gehäuse noch ein Einführen von Erntegut in das Gehäuse zu befürchten ist.

Nach Beendigung des zweiten Reversierbetriebs kann auf Bedienereingabe in die Bedienerschnittstelle 98 hin oder selbsttätig durch die Steuerung 72 wieder der Erntebetrieb gemäß Figur 2 aufgenommen werden.

## Patentansprüche

1. Gutaufnehmer (20), umfassend:
eine Aufsammeltrommel (34),
einen Hydromotor (52) zum wahlweisen Antrieb der Aufsammeltrommel (34) in einer ersten Richtung für den Erntebetrieb oder einer zweiten, reversierenden Richtung, und
einen der Aufsammeltrommel (34) zugeordneten, durch einen Hydraulikzylinder (54) zwischen einer angehobenen und einer abgesenkten Stellung beweglichen Niederhalter (40),
**gekennzeichnet durch** eine hydraulische Ventilanordnung, die betreibbar ist, Hydraulikfluid aus dem Hydraulikzylinder (54) dem Hydromotor (52) zur Reversierung zuzuführen.

2. Gutaufnehmer (20) nach Anspruch 1, wobei die Ventilanordnung betreibbar ist, durch den sich schwerkraftbedingt aus der angehobenen in die abgesenkte Stellung bewegenden Niederhalter (40) aus dem Hydraulikzylinder (54) hinausgedrücktes Hydraulikfluid aus dem Hydraulikzylinder (54) dem Hydromotor (52) zur Reversierung zuzuführen.

3. Gutaufnehmer (20) nach Anspruch 1 oder 2, wobei die Ventilanordnung ein fernsteuerbares Umschaltventil (74) umfasst, das in einer ersten Stellung den Hydraulikzylinder (54) mit einer Druckquelle verbindet und in einer zweiten Stellung den Hydraulikzylinder (54) mit dem Hydromotor (52) verbindet.

4. Gutaufnehmer (20) nach Anspruch 3, wobei zwischen dem fernsteuerbaren Umschaltventil (74) und dem Hydraulikzylinder (54) ein fernsteuerbares Absperrventil (76) angeordnet ist.

5. Gutaufnehmer (20) nach Anspruch 4, wobei eine das Umschaltventil (74) und das Absperrventil (76) verbindende Leitung (92) mit einem Druckspeicher (94) verbunden ist.

6. Gutaufnehmer (20) nach einem der Ansprüche 3 bis 5, wobei das Umschaltventil (74) in seiner zweiten Stellung den beim Reversieren der Aufsammeltrommel (34) als Auslass wirkenden Anschluss des Hydromotors (52) mit einem Tank (84) verbindet.

7. Gutaufnehmer (20) nach einem der Ansprüche 3 bis 6, wobei ein schaltbares Durchlassventil (78) parallel zum Hydromotor (52) geschaltet ist, das in seiner geöffneten Stellung einen Freilauf des Hydromotors (52) ermöglicht.

8. Gutaufnehmer (20) nach einem der Ansprüche 4 bis 7, wobei eine Steuerung (72) mit dem Umschaltventil (74) und dem Absperrventil (76) verbunden und betreibbar ist, die Ventilanordnung in einer Erntebetriebsart, in welcher sich das Umschaltventil (74) in seiner ersten Stellung befindet, das Durchlassventil (76) geschlossen ist und der Niederhalter (40) sich in seiner abgesenkten Stellung befindet, in einer ersten Reversierbetriebsart, in welcher sich das Umschaltventil (74) in seiner ersten Stellung befindet, das Durchlassventil (76) geöffnet ist und der Niederhalter (40) sich in seiner angehobenen Stellung befindet, und einer sich zeitlich an die erste Reversierbetriebsart anschließenden, zweiten Reversierbetriebsart zu betreiben, in welcher sich das Umschaltventil (74) in seiner zweiten Stellung befindet, das Durchlassventil (76) geöffnet ist und der Niederhalter (40) sich aufgrund der Schwerkraft absenkt und sein Hydraulikfluid den Hydromotor (52) reversiert.

9. Landwirtschaftliche Erntemaschine (10), vorzugsweise in der Art eines Feldhäckslers (10), eines Ladewagens, eines Mähdreschers oder einer Ballenpresse, mit einem Gutaufnehmer (20) gemäß einem der Ansprüche 1 bis 8.

10. Erntemaschine (10) nach Anspruch 9, wenn rückbezogen auf Anspruch 8, wobei die Steuerung (72) mit einer Pumpe (80) zur Versorgung des Hydromotors (52) im Erntebetrieb sowie Antrieben von Vorpresswalzen (42) und eines Abgabeförderers (36) des Gutaufnehmers (20) kontrollierend verbunden und betreibbar ist, in der Erntebetriebsart bei abgesenktem Niederhalter (40) die Aufnehmertrommel (34), den Abgabeförderer (36) und die Vorpresswalzen (42) in einer ersten Richtung anzutreiben, in der ersten, insbesondere manuell oder durch einen Sensor (50) veranlassbaren Reversierbetriebsart für eine vorgegebene Zeit die Aufnehmertrommel (34) nicht anzutreiben und vorzugsweise einen Freilauf des Hydromotors (52) zu ermöglichen und bei angehobenem Niederhalter (40) den Abgabeförderer (36) und die Vorpresswalzen (42) in einer zweiten Richtung anzutreiben und in der zweiten Reversierbetriebsart den Abgabeförderer (36) und die Vorpresswalzen (42) anzuhalten und die Aufnehmertrommel (34) durch den absinkenden Niederhalter (40) zu reversieren.

## Claims

1. Pick-up (20), comprising:
a picking-up drum (34),
a hydraulic motor (52) for either driving the picking-up drum (34) in a first direction for the harvesting mode or in a second, reversing direction, and
a holding-down device (40) which is assigned to the picking-up drum (34) and is movable by a hydraulic cylinder (54) between a raised and a lowered position,
**characterized by** a hydraulic valve arrangement which can be operated in order to supply hydraulic fluid from the hydraulic cylinder (54) to the hydraulic motor (52) for the reversing.

2. Pick-up (20) according to Claim 1, wherein the valve arrangement can be operated in order to supply hydraulic fluid which is pushed out of the hydraulic cylinder (54) by the holding-down device (40) moving because of gravity from the raised into the lowered position from the hydraulic cylinder (54) to the hydraulic motor (52) for the reversing.

3. Pick-up (20) according to Claim 1 or 2, wherein the valve arrangement comprises a remotely controllable switch-over valve (74) which, in a first position, connects the hydraulic cylinder (54) to a pressure source and, in a second position, connects the hydraulic cylinder (54) to the hydraulic motor (52).

4. Pick-up (20) according to Claim 3, wherein a remotely controllable shut-off valve (76) is arranged between the remotely controllable switch-over valve (74) and the hydraulic cylinder (54) .

5. Pick-up (20) according to Claim 4, wherein a line (92) connecting the switch-over valve (74) and the shut-off valve (76) is connected to a pressure accumulator (94).

6. Pick-up (20) according to one of Claims 3 to 5, wherein the switch-over valve (74) in its second position connects the connection of the hydraulic motor (52) acting as an outlet during the reversing of the picking-up drum (34) to a tank (84).

7. Pick-up (20) according to one of Claims 3 to 6, wherein a switchable pass-through valve (78) is connected parallel to the hydraulic motor (52) and, in its open position, permits free-running of the hydraulic motor (52).

8. Pick-up (20) according to one of Claims 4 to 7, wherein a controller (72) is connected to the switch-over valve (74) and to the shut-off valve (76) and can be operated to operate the valve arrangement in a harvesting operating mode, in which the switch-over valve (74) is in its first position, the pass-through valve (76) is closed and the holding-down device (40) is in its lowered position, in a first reversing operating mode, in which the switch-over valve (74) is in its first position, the pass-through valve (76) is open and the holding-down device (40) is in its raised position, and in a second reversing operating mode temporarily adjoining the first reversing operating mode, in which the switch-over valve (74) is in its second position, the pass-through valve (76) is open and the holding-down device (40) is lowered because of gravity and its hydraulic fluid reverses the hydraulic motor (52).

9. Agricultural harvester (10), preferably in the manner of a field chopper (10), a loading wagon, a combine harvester or a baler, with a pick-up (20) according to one of Claims 1 to 8.

10. Harvester (10) according to Claim 9 if referred back to Claim 8, wherein the controller (72) is connected in a controlling manner to a pump (80) for supplying the hydraulic motor (52) in the harvesting mode and driving precompression rollers (42) and an output conveyor (36) of the pick-up (20) and can be operated to drive the picking-up drum (34), the output conveyor (36) and the precompression rollers (42) in a first direction in the harvesting operating mode, with the holding-down device (40) lowered, not to drive the picking-up drum (34) for a predetermined time in the first reversing operating mode, which can be brought about in particular manually or by means of a sensor (50), and preferably to permit free running of the hydraulic motor (52) and, when the holding-down device (40) is raised, to drive the output conveyor (36) and the precompression rollers (42) in a second direction and, in the second reversing operating mode, to stop the output conveyor (36) and the precompression rollers (42) and to reverse the picking-up drum (34) by means of the dropping holding-down device (40).

## Revendications

1. Ramasseur (20), comportant :
un tambour de ramassage (34),
un moteur hydraulique (52) servant à l'entraînement sélectif du tambour de ramassage (34) dans un premier sens pour le fonctionnement de récolte ou dans un deuxième sens inversé, et
un dispositif de maintien vers le bas (40) associé au tambour de ramassage (34) et mobile entre une position élevée et une position abaissée au moyen d'un cylindre hydraulique (54),
**caractérisé par** un ensemble soupape hydraulique qui peut fonctionner pour acheminer du fluide hydraulique à partir du cylindre hydraulique (54) jusqu'au moteur hydraulique (52) pour l'inversion.

2. Ramasseur (20) selon la revendication 1, dans lequel l'ensemble soupape peut fonctionner pour acheminer du fluide hydraulique, expulsé du cylindre hydraulique (54) par le dispositif de maintien vers le bas (40) se déplaçant de la position élevée à la position abaissée sous l'effet de la force de gravité, à partir du cylindre hydraulique (54) jusqu'au moteur hydraulique (52) pour l'inversion.

3. Ramasseur (20) selon la revendication 1 ou 2, dans lequel l'ensemble soupape comporte une soupape de commutation (74) pouvant être commandée à distance, laquelle relie le cylindre hydraulique (54) à une source de pression dans une première position et relie le cylindre hydraulique (54) au moteur hydraulique (52) dans une deuxième position.

4. Ramasseur (20) selon la revendication 3, dans lequel une soupape d'arrêt (76) pouvant être commandée à distance est disposée entre la soupape de commutation (74) pouvant être commandée à distance et le cylindre hydraulique (54).

5. Ramasseur (20) selon la revendication 4, dans lequel une conduite (92) reliant la soupape de commutation (74) et la soupape d'arrêt (76) est reliée à un accumulateur de pression (94).

6. Ramasseur (20) selon l'une des revendications 3 à 5, dans lequel la soupape de commutation (74) relie, dans sa deuxième position, le raccord du moteur hydraulique (52) agissant en tant que sortie lors de l'inversion du tambour de ramassage (34) à un réservoir (84).

7. Ramasseur (20) selon l'une des revendications 3 à 6, dans lequel une soupape de passage (78) commutable est branchée parallèlement au moteur hydraulique (52), laquelle permet, dans sa position ouverte, un fonctionnement en roue libre du moteur hydraulique (52).

8. Ramasseur (20) selon l'une des revendications 4 à 7, dans lequel une commande (72) est reliée à la soupape de commutation (74) et à la soupape d'arrêt (76) et peut fonctionner pour faire fonctionner l'ensemble soupape dans un mode de fonctionnement de récolte dans lequel la soupape de commutation (74) se trouve dans sa première position, la soupape de passage (76) est fermée et le dispositif de maintien vers le bas (40) se trouve dans sa position abaissée, dans un premier mode de fonctionnement d'inversion dans lequel la soupape de commutation (74) se trouve dans sa première position, la soupape de passage (76) est ouverte et le dispositif de maintien vers le bas (40) se trouve dans sa position élevée, et un deuxième mode de fonctionnement d'inversion subséquent au premier mode de fonctionnement d'inversion, deuxième mode de fonctionnement d'inversion dans lequel la soupape de commutation (74) se trouve dans sa deuxième position, la soupape de passage (76) est ouverte et le dispositif de maintien vers le bas (40) s'abaisse en raison de la force de gravité et son fluide hydraulique inverse le moteur hydraulique (52).

9. Machine de récolte agricole (10), de préférence de type ramasseuse-hacheuse (10), chargeuse, moissonneuse-batteuse ou presse à balles, comprenant un ramasseur (20) selon l'une des revendications 1 à 8.

10. Machine de récolte (10) selon la revendication 9 lorsqu'elle dépend de la revendication 8, dans laquelle la commande (72) est reliée, de manière à la contrôler, à une pompe (80) servant à l'alimentation du moteur hydraulique (52) lors du fonctionnement de récolte ainsi que d'entraînements de rouleaux de pré-compression (42) et d'un convoyeur de transfert (36) du ramasseur (20) et peut fonctionner pour, dans le mode de fonctionnement de récolte, lorsque le dispositif de maintien vers le bas (40) est abaissé, entraîner le tambour de réception (34), le convoyeur de transfert (36) et les rouleaux de pré-compression (42) dans un premier sens, dans le premier mode de fonctionnement d'inversion pouvant être provoqué en particulier manuellement ou par un capteur (50), ne pas entraîner le tambour de réception (34) pendant une période prédéfinie et permettre de préférence un fonctionnement en roue libre du moteur hydraulique (52), et pour entraîner le convoyeur de transfert (36) et les rouleaux de pré-compression (42) dans un deuxième sens lorsque le dispositif de maintien vers le bas (40) est élevé, et, dans le deuxième mode de fonctionnement d'inversion, bloquer le convoyeur de transfert (36) et les rouleaux de pré-compression (42) et inverser le tambour de réception (34) au moyen du dispositif de maintien vers le bas (40) s'abaissant.
